# FASCICULE DE BREVET EUROPEEN

(11) **EP 0 549 696 B1**
(45) Date de publication et mention de la délivrance du brevet: **13.07.1994**
(21) Numéro de dépôt: 91917279.1
(22) Date de dépôt: 17.09.1991
(51) Int. Cl.: G06F 15/24

(54) **PROCEDE DE GESTION ET DE SUPERVISION DE PROCESSUS PAR L'INFORMATION PORTEE PAR DES OBJETS A L'AIDE D'ETIQUETTES ELECTRONIQUES ET DISPOSITIF DE MISE EN UVRE**
VERFAHREN UND APPARAT ZUR VERWALTUNG UND ÜBERWACHUNG VON PROZESSEN MITTELS INFORMATION, DIE AUF VON OBJEKTEN GETRAGENEN ETIKETTEN GESPEICHERT IST.
METHOD AND DEVICE FOR CONTROLLING AND MONITORING PROCESSES USING INFORMATION FURNISHED BY ELECTRONICALLY-LABELLED ARTICLES

(30) Priorité: 21.09.1990 FR 9011652
(43) Date de publication de la demande: 07.07.1993
(73) Titulaire: DS INNOVATION, F-94000 Créteil (FR)
(72) Inventeur: Saulnier, Dominique, F-94000 Créteil (FR)
(74) Mandataire: Sauvage, Renée
(86) Numéro de dépôt international: FR9100731
(87) Numéro de publication internationale: WO9205500

(56) Documents cités:
- EP-A- 0 037 649
- EP-A- 0 307 335
- US-A- 4 509 123
- US-A- 4 636 950
- US-A- 4 807 140

## Description

La présente invention se rapporte à un procédé de gestion et de supervision de processus par l'information portée par des objets à l'aide d'étiquettes électroniques, ainsi qu'à un dispositif de mise en oeuvre de ce procédé.

Dans une installation industrielle, telle qu'une installation de fabrication de biens d'équipement, il est souvent nécessaire de gérer automatiquement la fabrication, en harmonie complète entre la gestion et l'efficacité de l'outil, afin d'assurer au produit fabriqué la meilleure qualité possible. Ceci est d'autant plus le cas lorsque l'installation comporte un grand nombre de machines et s'applique à des produits diversifiés fabriqués à cadence rapide.

L'information nécessaire à la gestion de tels processus peut être soit mémorisée sous forme centralisée dans la mémoire d'un calculateur central, soit être répartie sur le site de production dans une multitude de mémoires autonomes, appelées "étiquettes électroniques" et fixées sur les objets fabriqués. A ces deux possibilités de stockage et d'organisation de l'information nécessaire à la gestion du processus de fabrication correspondent deux types différents d'organisation de la production, l'un centralisé, et l'autre réparti.

Dans un processus centralisé de production, la fabrication est organisée en une ou plusieurs "campagnes" successives dédiées chacune à un seul type de produit. Au cours d'une même campagne de fabrication,chaque machine de l'installation de fabrication "connaît" parfaitement la gamme d'opérations qu'elle doit effectuer sur les produits fabriqués, et ne nécessite pas d'informations complémentaires de la part du système central de gestion. Ces informations complémentaires ne sont nécessaires qu'à l'occasion d'un changement de campagne, qui s'accompagne généralement d'opérations, plus longues, de changement d'outils, sur les machines de l'installation.

Cependant, une fabrication en campagne n'est pas compatible avec une gestion industrielle performante. En effet, on risque de produire des quantités inférieures à la demande, et lorsque l'on doit démarrer une nouvelle campagne pour fabriquer en quantité suffisante un produit, les délais de livraison du type de produit précédemment fabriqué peuvent s'allonger, et les clients délaisser le fabricant. Pour éviter de tels risques, on peut envisager de produire davantage, mais au risque d'un stockage important, dont le coût n'est pas négligeable, et/ou d'invendus. Il faut toutefois noter que le système central de gestion dispose dans sa mémoire centrale de toute l'information concernant les produits répartis sur le site de production.

Pour éviter ces problèmes d'anticipation de besoins du marché, une solution consiste à produire en permanence, en quantités compatibles avec la demande du marché, sous le contrôle du centre de gestion, plusieurs types de produits différents: c'est ce que l'on appelle l'organisation "flexible". Dans ce cas, il faut changer les programmes de travail de chaque machine aussi fréquemment que l'on change de produit. Du fait que l'information est centralisée, on augmente de façon corrélativement importante le débit de transmission d'informations entre chaque machine et la mémoire du calculateur central, au risque de saturer les lignes de communication, et par conséquent de limiter rapidement la flexibilité du processus de fabrication.

En outre, l'organisation centralisée est très vulnérable en cas de défaillance du système central de gestion, et une panne de ce système central peut entraîner l'arrêt de toute la production.

Pour remédier aux défauts cités ci-dessus, on peut avoir recours aux étiquettes électroniques qui constituent un système d'information à base de données portable et répartie. Ces étiquettes comportent généralement une mémoire dont l'accès est sélectif (mémoire lue information par information ou groupe d'informations par groupe d'informations), par opposition aux étiquettes électroniques de type transactionnel pour lesquelles l'information est accessible dans son intégralité, même lorsque l'on n'a besoin que d'une partie de cette information.

Chaque étiquette électronique constitue une base de données portable contenant toutes les informations de caractérisation du produit et nécessaires au processus à exécuter sur le produit sur lequel est fixée l'étiquette, de sorte que chaque machine devant laquelle se présente une étiquette électronique prélève, à l'aide d'un lecteur approprié, les données nécessaires aux opérations qu'elle doit effectuer.La gestion est alors du type réparti.

Toutefois, dans une telle installation à étiquettes électroniques, les produits, et par conséquent les informations, contenues dans les étiquettes électroniques qu'ils portent, et qui sont nécessaires aux opérations à effectuer sur ces produits, sont dispersés sur le site de fabrication. Par conséquent, en l'absence de communication entre les étiquettes et les différentes machines via le lecteur approprié, il n'est jamais possible de connaître à tout instant la totalité de ces informations afin d'être à même d'optimiser la gestion. Bien entendu, un opérateur muni d'un système de lecture portable pourrait lire ces informations dispersées sur le site de fabrication pour les stocker dans le système de lecture, et les restituer au centre de gestion en raccordant le lecteur portable au centre de gestion. Mais une telle démarche ne serait pas compatible avec une gestion rationnelle de la production qui nécessite la connaissance à tout instant de l'état du processus, contenu principalement, au niveau de chaque produit fabriqué, dans son étiquette électronique.

De ce point de vue, alors qu'avec le système centralisé, le centre de gestion dispose à tout moment de l'ensemble des informations concernant les produits fabriqués, on ne peut, dans une installation répartie, organiser de façon permanente l'information portée par les objets en une base de données mise à jour en temps quasi-réel (c'est-à-dire à chaque échange de données entre les étiquettes électroniques et des émetteurs-récepteurs fixes avec lesquels elles coopèrent) et accessible à tout instant. Ceci constitue une faiblesse du système réparti dont les informations individuelles ne servent chacune qu'au traitement local (attaché à chaque point de décision), et qui ne peut appréhender l'ensemble des informations de l'installation.

La présente invention a pour objet un procédé de gestion d'une installation comportant un centre de supervision, plusieurs dispositifs fixes d'échange de données, et des dispositifs informatifs portés par des objets mobiles et contenant des informations liées à ces objets, ces dispositifs informatifs comportant des moyens d'échange de données susceptibles de coopérer avec les dispositifs fixes, procédé permettant de gérer de façon optimale l'installation et de connaître à tout moment l'état courant de la totalité de la base de données représentée par toutes les informations stockées dans les dispositifs informatifs, pour pouvoir organiser et gérer en temps quasi-réel et de façon totalement "transparente" pour le centre de gestion et les autres services (qualité, maintenance,..) l'information.

La présente invention a également pour objet un dispositif de mise en oeuvre du procédé de l'invention, dispositif simple et peu onéreux, facile à implanter dans toute installation industrielle.

Le procédé conforme à l'invention consiste à centraliser les informations, portées par les objets et dispersées dans l'installation, en une base de données reliée aux dispositifs fixes qui capturent prioritairement dans leur mémoire associée au moins la partie essentielle de ces informations et qui téléchargent au moins une partie du contenu de la mémoire associée dans la base de données pour l'actualiser en temps réel. La base de données coordonne l'ensemble de capture d'informations et élabore une stratégie pour disposer de toutes les données nécessaires,

On connaît, d'après EP-A-0 037 649, un dispositif de gestion de stock de marchandises dont la base de données n'a connaissance que des articles en stock et des opérations à effectuer dans la journée, et ce, sous la commande d'un opérateur. Les liaisons entre l'ordinateur du client et l'ordinateur central se font par transport manuel de disquettes.

Il n'est donc pas question, dans ce dispositif connu, de liaison entre le lieu de saisie des informations et l'ordinateur central de traitement et, de ce fait, à la différence du dispositif selon l'invention, le dispositif connu ne permet pas d'actualiser en temps réel la base de données pour une éventuelle optimisation du processus.

Avantageusement, selon l'invention, les informations mémorisées dans chaque dispositif fixe y sont rangées par type, et la base de données peut ne relever que les informations ayant changé depuis le dernier relevé. Mais, l'information relative au type de produit (référence, numéro de série,...) et qui le caractérise est prélevée à chaque fois afin que la base de données puisse connaître à tout moment la position géographique de ce produit .La base de données peut relevcr les informations par types différents et choisir le type des informations à relever dans les dispositifs fixes.

Selon un autre aspect du procédé de l'invention, dans chaque dispositif fixe, un programme exploite localement les informations fournies par chaque dispositif informatif qui se présente devant lui. Le programme de chaque dispositif fixe peut donner la priorité à la relève des informations demandées par la base de données pour mettre à jour la base de données. De façon avantageuse, chaque dispositif fixe optimise les accès aux informations de chaque dispositif informatif qui se présente devant lui.

Le dispositif de gestion de processus conforme à l'invention comporte un centre de supervision, plusieurs dispositifs fixes d'échange de données sans contact et de traitement local, et des dispositifs informatifs pouvant être fixés sur des articles mobiles soumis au processus, ces dispositifs informatifs comportant des moyens d'échange de données susceptibles de coopérer avec les dispositifs fixes , et dotés d'une mémoire non volatile, et ce dispositif est caractérisé par le fait que le centre de supervision est relié à des moyens de mémorisation organisés en base de données, que les différents dispositifs fixes d'échange de données comportent chacun une mémoire susceptible de stocker des informations provenant des dispositifs informatifs, et une mémoire de programme contenant un programme de gestion locale et un programme d'optimisation d'accès à la base de données et aux dispositifs informatifs, ces dispositifs fixes étant reliés à la base de données par une liaison à haut débit. Selon un mode de réalisation de l'invention, les dispositifs informatifs sont des "étiquettes électroniques" connues en soi.

La présente invention sera mieux comprise à la lecture de la description- détaillée d'un mode de réalisation pris à titre d'exemple non limitatif et illustré par le dessin annexé, sur lequel:
- la figure 1 est un schéma simplifié d'une installation connue de gestion de type centralisé ,
- la figure 2 est un schéma simplifié d'une installation connue de gestion de type réparti,

la figure 3 est un schéma simplifié d'une installation de gestion conforme à l'invention,
-la figure 4 est un schéma d'un mode de réalisation d'un dispositif fixe d'échange de données du dispositif de l'invention,
les figures 5 et 6 sont des diagrammes d'exemples de sous-ensembles logiciels pouvant être implantés dans le dispositif des figures 3 et 4,
la figure 7 est un diagramme d'une architecture de la base de données conforme à l'invention, et
la figure 8 est un diagramme d'un exemple de protocole de communication sur le réseau à haut débit du dispositif de l'invention.

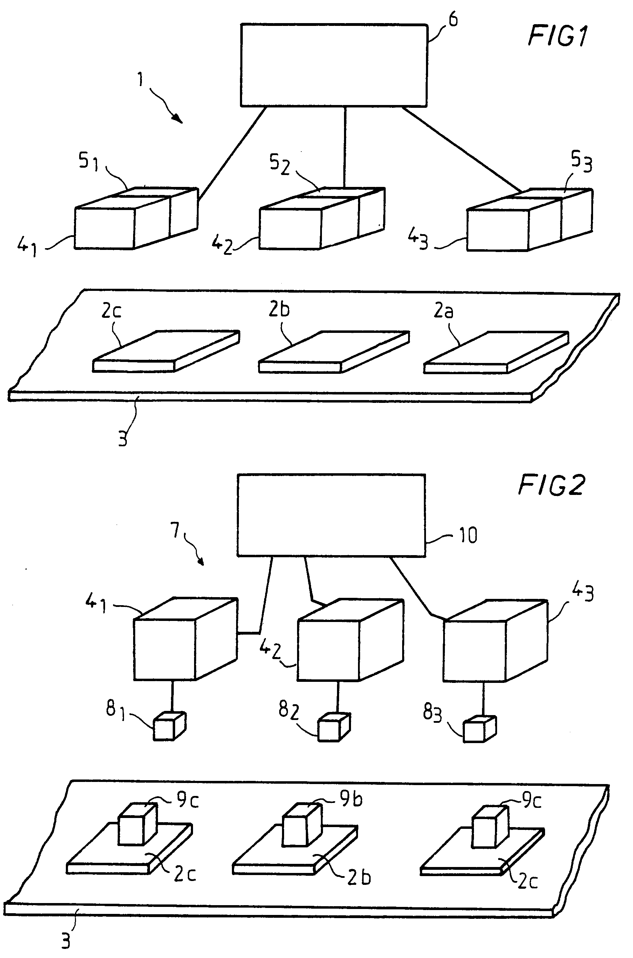

Le dispositif 1 de gestion d'installation industrielle représenté de façon très simplifiée en figure 1 est chargé de commander une ligne de fabrication de produits 2a, 2b, 2c,... placés sur un ruban convoyeur 3. Ces produits passent devant des machines 4₁,4₂,4₃,...et s'arrêtent devant toutes ces machines. Ces machines, telles que des machines-outils,interviennent généralement sur tous les produits qui s'arrêtent devant elles. Chaque machine est commandée par une interface électronique de commande, respectivement 5₁ ,5₂,5₃,... Toutes les interfaces sont reliées à un calculateur central de commande et de planification 6.

En figure 2, on a représenté un système 7 réparti de gestion de processus industriel. Les éléments similaires à ceux de la figure 1 sont affectés des mêmes références numériques. Les machines 4₁,4₂,4₃,... sont reliées chacune à un émetteur-récepteur, respectivement 8₁,8₂,8₃,... coopérant avec des étiquettes électroniques 9a,9b,9c,... fixées sur les produits 2a,2b,2c,.... respectivement. Chacun des émetteurs-récepteurs comporte un circuit local d'exploitation de données qui utilise les informations communiquées à chaque fois par l'étiquette électronique attachée à un produit se présentant devant la machine correspondante pour commander de façon autonome à cette machine le travail à effectuer sur le produit. Les différents émetteurs-récepteurs sont reliés à un centre de supervision 10. Ce centre n'intervient qu'occasionnellement, par exemple pour effectuer des vérifications ou des relevés individuels sur les différentes machines ou pour charger dans les diverses machines de nouveaux programmes de commande de machines à l'occasion d'un changement de type de fabrication,... Mais ce centre 10 n'intervient pas dans les routines du processus effectué par les différentes machines, ces routines étant effectuées uniquement sous la commande des émetteurs-récepteurs.

Comme précisé ci-dessus, dans un tel système à gestion répartie, le centre de supervision 10 ne peut jamais avoir connaissance de la totalité des données concernant le processus de fabrication des produits, et ne peut donc intervenir par exemple pour effectuer des corrections en cas de dérive de certains paramètres, ou ne peut connaître à tout moment l'état d'avancement d'une fabrication. En outre, chaque machine ne peut savoir à l'avance quel travail a été effectué sur un produit qui se présentera devant elle depuis un poste de travail précédent, ce qui ne permet pas d'anticiper la préparation de ce poste de travail, et de déterminer si la machine est apte à réaliser la tâche, ce qui entrave l'optimisation du processus.

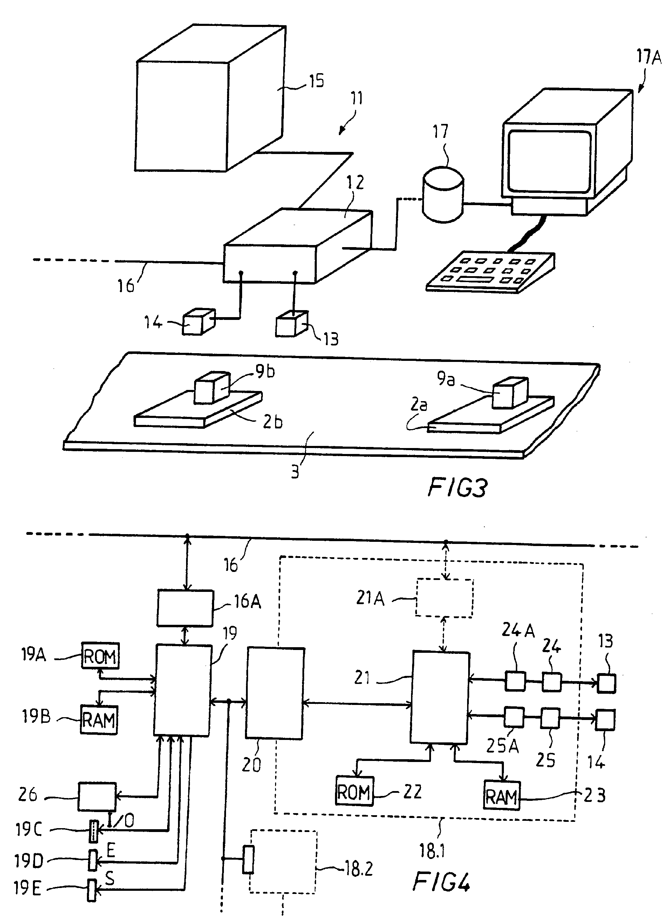

On a représenté en figure 3 le schéma simplifié d'un dispositif conforme à l'invention. Les éléments similaires à ceux des figures 1 et 2 sont affectés des mêmes références numériques. Sur cette figure 3, on n'a représenté qu'un seul poste de décision ou de travail 11 Ce poste de décision comporte un dispositif fixe 12 d'échange de données qui est relié à des interfaces 13, 14 capables de coopérer avec des dispositifs informatifs qui sont, dans le cas présent, des étiquettes électroniques 9a, 9b,... fixées sur des produits 2a, 2b,...disposés sur un convoyeur 3. Dans la suite du texte, ces dispositifs seront dénommés simplement étiquettes, mais il est bien entendu que les dispositifs informatifs peuvent être de tout autre type, du moment qu'ils présentent une capacité de mémorisation et de communication avec les dispositifs fixes : par exemple des dispositifs à communication laser, magnétique, optique,vocale,...ou même, dans le cas où les postes 11 sont des terminaux de distribution de bien ou de services accessibles à des usagers, tels que des terminaux dispersés géographiquement d'un système bancaire ou de distribution automatique d'essence, les dispositifs informatifs peuvent être des objets à insert ou des cartes à mémoire ou à microprocesseur (dites "smart-cards") utilisées par les usagers ou bien les usagers eux-mêmes qui peuvent communiquer avec les postes fixes vocalement et/ou y faire analyser leurs empreintes digitales et/ou introduire des codes sur un clavier,... Dans le cas présent, les interfaces 13, 14 sont des émetteurs-récepteurs, mais il est également bien entendu qu'un seul ou plus de deux émetteurs-récepteurs peuvent être reliés au dispositif 12 en fonction des caractéristiques du poste de décision 11.

Par exemple dans le cas où le poste 11 est un long tunnel de traitement thermique et/ou chimique à dispositif unique et centralisé de régulation , il peut être nécessaire d'y disposer un grand nombre d'émetteurs-récepteurs tous reliés au même dispositif 12 puisque tous ces émetteurs-récepteurs échangent des données avec l'unique dispositif fixe de régulation de ce tunnel.

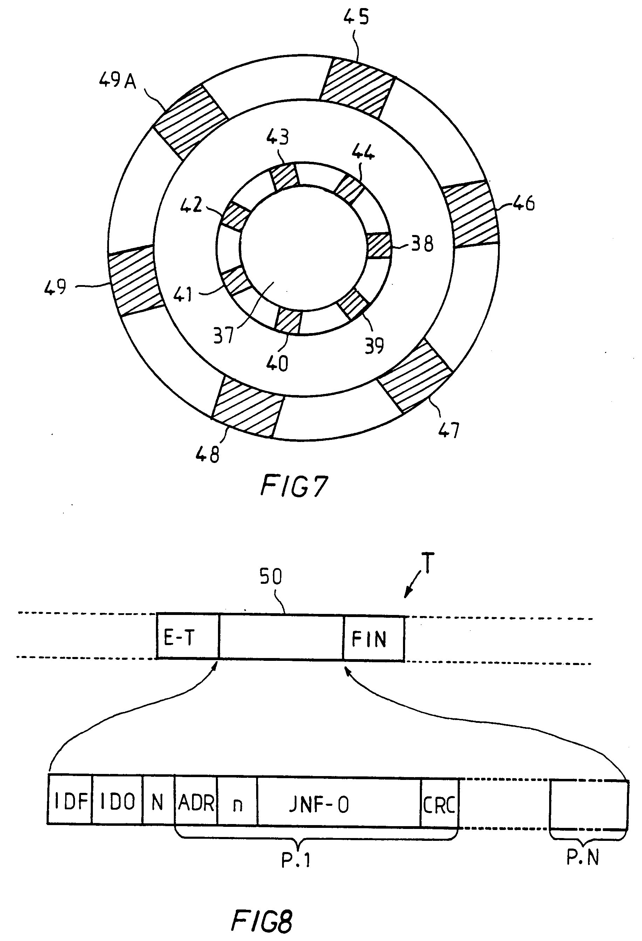

Le dispositif 12, décrit plus en détail ci-dessous, est relié par ailleurs à au moins une machine 15 chargée d'intervenir sur les produits s'arrêtant devant les émetteurs-récepteurs 13, 14. La machine 15 est par exemple une machine-outil ou un robot de manipulation, ou une machine de soudage. Le dispositif fixe 12 est également relié, par une ligne de transmission à haut débit d'informations 16 à un dispositif 17 de mémorisation organisé en base de données et décrit ci-dessous en référence à la figure 7. Le dispositif 17 peut être relié à une console de commande 17A ou au centre de gestion.

Les informations contenues dans les dispositifs informatifs 9a, 9b sont communiquées au dispositif 17 au fur et à mesure de leur évolution pour y constituer une base de données constamment actualisée et comportant la totalité des informations (ou tout au moins les informations importantes et nécessaires au processus mis en oeuvre) relatives à 1' "objet" du processus industriel ou informatique. Par objet, on entend, dans le cas d'un processus industriel, l'ensemble des produits fabriqués ou traités par ce processus, y compris les produits en stock avant fabrication ou traitement et les produits fabriqués ou traités non encore livrés aux clients. Dans le cas d'un processus informatique (par exemple la gestion d'un compte bancaire ou d'un réseau de distribution de biens ou de services ou la gestion d'un flux de personnes, de produits, de véhicules, de conteneurs,...) ,il s'agit de la totalité des données traitées par ce processus, ou tout au moins de toutes les données importantes. Dans la suite du texte, on appellera simplement "informations" ces "informations-objet", et "étiquettes" les dispositifs informatiques portant ces informations, quelle que soit la nature de ces dispositifs.

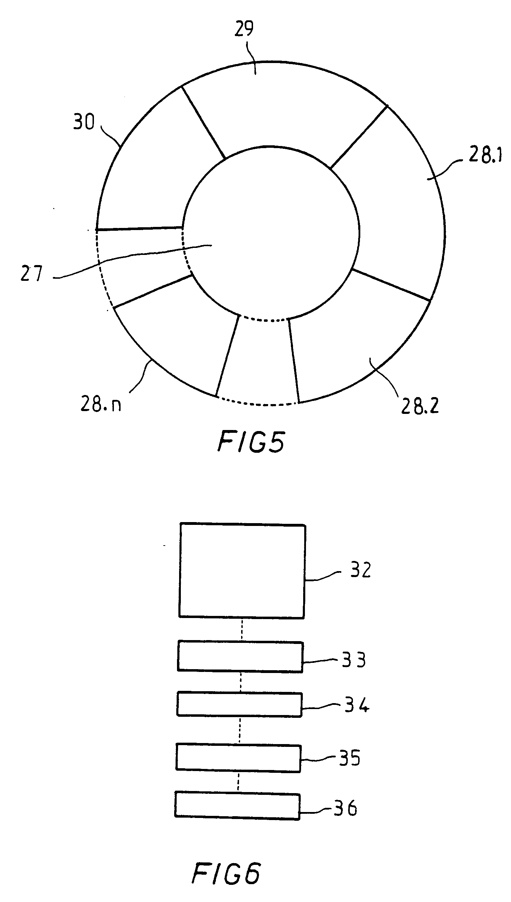

Le schéma simplifié de la figure 4 montre un exemple de réalisation des principaux éléments d'un circuit de capture pouvant équiper le dispositif 12 et relié aux interfaces 13, 14. Le circuit 12 peut comporter plusieurs circuits de capture 18.1, 18.2,... Un seul d'entre eux, référencé 18.1, est représenté de façon détaillée sur la figure 4. Ce circuit 18.1 est commandé par un processeur principal 19 qui lui est relié via une interface 20. Le circuit 18.1 comporte son propre processeur local 21 qui est relié à une mémoire de programme 22 et à une mémoire vive 23.

La mémoire 22 peut être une mémoire morte (éventuellement amovible et remplaçable) ou une mémoire vive non volatile téléchargeable. Cette mémoire 22 contient, entre autres, des instructions permettant d'activer, en fonction des informations reçues des étiquettes, l'actualisation de la base de données, le traitement local par le dispositif 12, les relations avec les autres dispositifs fixes 12 répartis dans l'installation. Cette mémoire 22 contient également un algorithme d'optimisation d'accès à l'étiquette dans les communications entre l'étiquette et le dispositif fixe 12. Cet algorithme utilise l'intégralité des moyens émetteurs-récepteurs (13, 14, ...) raccordés à tous les dispositifs de capture (18.1,...18.n) reliés au dispositif fixe. Au cas où l'un des dispositifs fixes 12 ne peut achever une tâche commandée par l'algorithme, ce dernier peut en demander l'exécution ou la fin d'exécution à un autre dispositif fixe. Une partie des informations relatives aux produits soumis au processus peut être fournie par l'organe de traitement local (machine 15 par exemple) relié au dispositif fixe. Dans ce cas, le processeur 19, via l'interface 20, actualise la mémoire 22 et en informe les circuits de capture 18 dont le processeur 21 modifie en conséquence l'algorithme prédictif.

Le processeur 21 est également relié via des interfaces 24, 25 aux émetteurs-récepteurs 13, 14. Ces interfaces 24, 25 sont avantageusement programmables en fonction du type des étiquettes avec lesquelles elles doivent coopérer. Cette programmation peut même être opérée en cours de processus, ce qui permet alors d'utiliser dans une même installation différents types d'étiquettes. Bien entendu, dans ce dernier cas, il est préférable d'anticiper l'arrivée d'un objet muni d'une étiquette de type différent. Le processeur 19 est par ailleurs relié à une mémoire de programme 19A et à une mémoire vive 19B, et est d'autre part relié,via une interface 16A au réseau à grand débit 16. Le processeur 19 est aussi relié à une mémoire vive "de contexte" 26. Selon une variante, représentée en traits interrompus, chacun des processeurs 21 peut être relié via une interface 21A au réseau 16. Les différentes interfaces 16A comportent avantageusement des moyens de distribution de priorité gérant l'accès à la base de données 17 en cas de simultanéité de demandes de la part de plusieurs dispositifs fixes 12.

De façon avantageuse, on intercale entre le processeur 21 et les interfaces 24, 25 des adaptateurs de protocole 24A, 25A. De façon avantageuse, afin d'optimiser les performances d'accès aux informations des étiquettes, les adaptateurs 24A, 25A pilotent le protocole de communication entre les émetteurs-récepteurs et les étiquettes. Ces adaptateurs de protocole peuvent être réalisés avec un processeur chargé de recevoir des instructions du processeur 21 pour bâtir le protocole nécessaire et disposer d'un espace mémoire suffisant pour éviter de synchroniser l'action du processeur 21 avec les échanges physiques de signaux des étiquettes, ce qui permet d'optimiser le fonctionnement du circuit de capture 18. Chaque circuit 18 est avantageusement réalisé sur une carte individuelle avec son interface 20. Le processeur 19 est relié à au moins : un connecteur 19C d'entrée-sortie série, un connecteur d'entrée parallèle 19D et un connecteur de sortie parallèle 19E. De façon avantageuse, la partie des commandes concernant le traitement local des informations des étiquettes est rangée dans la mémoire 19A, et la partie des commandes concernant les informations à envoyer à la base de données ou à d'autres dispositifs fixes 12 est rangée dans la mémoire 22.

Selon un mode de réalisation, illustré en figure 5, le processeur 19 est bâti à partir d'une structure à noyau en temps réel 27 auquel sont subordonnées plusieurs tâches de capture 28.1, 28.2, ... 28.n associées aux circuits de capture correspondants 18.1, 18.2,...18n ,une tâche 29 de commande de machines (machine 15 par exemple), et une tâche de contexte 30. La tâche 29 de commande de machines est définie par la mémoire de programme 19A et associe les informations fournies par les étiquettes et provenant des tâches de capture 28 et/ou de la tâche de contexte 30 et/ou de la machine 15 via la liaison série (19C), à des événements présentés par des dispositifs raccordés aux entrées série et/ou parallèle 19C, 19D du dispositif 18 pour activer la ou les différentes machines (15) reliées aux sorties série et/ou parallèle (19C, 19E) du dispositif 18. La tâche de contexte 30 permet la mise à jour de la mémoire de contexte 26 suite à des demandes de consultation de la base de données 17 émises par le dispositif 12 via le réseau 16 et l'interface 16A, la base de données retournant l'information demandée, ou suite à la surveillance du trafic sur le réseau 16 sur lequel transitent toutes les informations destinées à la base de données 17 et nécessaires à la mise à jour de la mémoire de contexte 26. On remarquera qu'afin de ne pas surcharger le réseau 16, on n'y fait, de préférence, transiter que les informations ayant été modifiées dans les dispositifs fixes 12.

On a illustré en figure 6 un autre mode de réalisation selon lequel le processeur 19 met en oeuvre un programme principal 32 auquel sont rattachés des sous-programmes 33 de communication, 34 de gestion d'entrées-sorties, 35 de gestion locale (mise en oeuvre par le circuit 18) et 36 de routines diverses. Dans la suite de la description, on se réfèrera à l'exemple de la figure 5, mais il est bien entendu que l'exemple de la figure 6, ou tout autre mode de réalisation équivalent pourrait être utilisé.

Une fonction importante du circuit 18 est de "photographier" dans la mémoire vive 23 au moins une partie du contenu de chaque étiquette qui se présente devant ses émetteurs-récepteurs 13, 14, et de communiquer aussitôt ou peu après, en fonction de priorités assignées aux tâches 28 par le processeur 19, à la base de données 17 via le réseau 16 les informations de la mémoire 23 qui ont été modifiées.

Par ailleurs, on peut optimiser le fonctionnement des circuits de capture 18 en ne relevant dans les étiquettes que les informations ayant changé depuis le dernier relevé, par exemple en rangeant les informations modifiées dans des emplacements spécifiques des mémoires de ces étiquettes, ou en affectant les informations modifiées de codes spécifiques (tels que code correspondant au dispositif 12 les ayant modifiées ou code horaire).Les informations lues dans les étiquettes sont rangées dans la mémoire vive 23 pour être transmises très rapidement, en fonction de priorités, à la base de données 17.

L'optimisation nécessaire, compte tenu des temps d'accès à l'information des étiquettes, doit être menée sur les plans de l'acquisition physique des informations des étiquettes et de la stratégie d'optimisation d'accès à ces étiquettes.

L'optimisation d'acquisition physique consiste à réduire en nombre et en complexité les organes de traitement entre l'étiquette et le processeur 21 de sorte que ce dernier se limite à commander des adaptateurs de protocole (24A, 25A) qui sont avantageusement eux-mêmes des processeurs dont la tâche consiste à recevoir des instructions du processeur 21 et à les traduire suivant le protocole utilisé pour les communications entre les étiquettes (ou dispositifs informatifs en général, tels que cités ci-dessus)et les émetteurs-récepteurs (13, 14). Ces derniers peuvent alors être de simples interfaces adaptées au médium utilisé pour lesdites communications. Ces adaptateurs de protocole peuvent comporter un espace mémoire suffisant pour y stocker temporairement les instructions du processeur 21 et les informations recueillies ou à transmettre aux étiquettes. Une telle configuration présente des performances d'accès maximales. Toutefois, on peut envisager une autre configuration avec un organe de traitement intercalé entre le processeur 21 et les émetteurs-récepteurs 13, 14, sans les adaptateurs 24A, 25A, mais les performances sont alors dégradées.

L'optimisation d'accès concerne le processeur 21 qui est au "carrefour" des besoins d'information-objet exprimés par le processeur 19 pour la mise à jour permanente de la base de données 17 et pour les actions de la tâche 29. A cet effet, on prévoit que le processeur 21 exécute, pour l'accès à l'information, un algorithme d'accès prédictif ou autoadaptatif qui, en fonction du vécu des requêtes formulées par le programme de la mémoire 19A, par l'actualisation de la base de données 17, par les autres dispositifs 12 émettant une demande de consultation de la base de données 17 pour réactualiser le contenu de leur mémoire de contexte, définit sa propre stratégie d'accès aux étiquettes et constitue la base de faits d'un système expert d'accès qui se met à fonctionner dès qu'une étiquette entre en communication avec l'adaptateur de protocole correspondant. Au fur et à mesure des précisions apportées par les requêtes réelles, le processeur 21 affine la base de faits et optimise la stratégie en accordant aux faits réels une pondération maximale. En outre, le dispositif 12 doit rechercher toutes les possibilités d'actualiser la base de données 17 de sorte que si l'information nécessaire n'a pu être recueillie par un émetteur-récepteur (13, 14), le circuit de capture en cause doit tenter de la recueillir par l'intermédiaire de tous les émetteurs-récepteurs des autres circuits de capture 18 du même dispositif fixe 12. En cas d'insuccès, il doit informer la base de données 17 qui lance alors une action de bonne fin sur tous les dispositifs fixes (12) de l'installation.

Dans la base de données 17, l'information-objet est arrangée avec l'identification de l'objet qui s'y rattache, l'identification du dispositif fixe (12) qui l'a prélevée, et éventuellement, avec l'heure d'actualisation.

Un exemple de fonctionnement du circuit 18 peut être le suivant. A la mise en service, la tâche 28 de ce circuit peut être configurée à partir d'un bloc de configuration (qui peut être logé dans la mémoire 22 ou dans la mémoire 19A), ou peut être téléchargée par la base de données 17 via le réseau 16.

Tant qu'aucune étiquette ne se présente devant les dispositifs 13, 14 le processeur 21 retourne un mot d'état (signifiant: "pas d'étiquette") au processeur 19.

Lorsqu'une étiquette se présente devant l'un des dispositif 13, 14, la tâche 30 exécute ,de préférence prioritairement, le relevé des informations de cette étiquette, en particulier si le produit sur lequel est fixée l'étiquette doit séjourner brièvement dans la station de travail 11. Cette priorité de lecture des informations de l'étiquette n'est pas nécessairement la règle générale, et elle peut évoluer au cours du temps, et être reconfigurable par exemple dans la mémoire 19A sous la commande de la base de données 17 ou en fonction de données contenues dans l'étiquette.

Dans certains cas, par exemple si le produit en question doit être immédiatement traité dans le poste de travail dès qu'il y parvient (traitement chimique urgent,...), son étiquette transmet aussitôt les seules informations nécessaires à ce traitement. Ce n'est que lorsque ce traitement est amorcé que l'étiquette transmet, à la requête de la base de données, tout ou partie de son contenu au dispositif 12. Dans d'autres cas, il peut être nécessaire que tout d'abord le dispositif fixe 12 fournisse des données à l'étiquette, par exemple pour vérifier la qualité de la transmission ou pour signaler à l'étiquette que le poste de travail est engorgé ou en panne et que les produits doivent être aiguillés vers un autre poste de travail.

La lecture des informations contenues dans une étiquette électronique peut être effectuée soit pour la totalité de ces informations, soit sélectivement. Dans ce dernier cas, le dispositif fixe 12 peut ne lire que les informations ayant changé depuis la dernière lecture et/ou les informations qui ne concernent que son poste de travail. Dans le cas d'une lecture préalable sélective, et où deux ou plusieurs tâches du processeur 19 du dispositif 12 demandent de lire dans l'étiquette électronique certaines zones de sa mémoire non encore lues et que ces zones (ou plus exactement les adresses correspondantes) ont des parties communes , le processeur 21 ne lit ces parties communes qu'une seule fois. Par exemple, si une tâche demande la lecture des zones n à n+3, puis une autre tâche demande la lecture des zones n+2 à n+5, le processeur 21 ne lit qu'une seule fois les zones n+2 et n+3. En effet, en réponse à la première demande, il range dans sa mémoire vive 23 les zones n à n+3 après les avoir lues, et à la deuxième demande, il ne lit que les zones qu'il n'a pas encore mémorisées, c'est-à-dire n+4 et n+5. En outre, si plusieurs demandes de lecture de la mémoire de l'étiquette électronique sont émises en un court laps de temps et que les zones correspondantes sont contiguës,la totalité de ces zones est lue en une seule fois. Si par exemple une tâche demande la lecture des zones m à m+5 et une autre celle des zones m+6 à m+12, le processeur 21 lit en une fois l'ensemble des zones m à m+12.

Lorsque le dispositif 12 a lu toutes les informations d'une étiquette qui se présente devant lui, ou tout au moins le minimum d'informations qui lui sont nécessaires, et les a rangées dans sa mémoire vive 23, il en informe le processeur 19. La transmission vers la base de données 17 est commandée à l'initiative du processeur 19. Les informations transmises à la base de données 17 via le réseau 16 peuvent être soit toutes celles reçues de l'étiquette électronique, soit une partie de celles-ci. En effet, il peut être prévu d'effectuer également une transmission vers la base de données 17 à la fin du travail effectué dans au moins une partie des postes de travail. Dans ce cas, le processeur 21 transmet à l'étiquette et à la base de données 17 une information comportant par exemple les caractéristiques du travail qu'il vient de réaliser, des résultats de mesures effectuées à la suite de ce travail, des ordres d'aiguillage vers un poste de travail suivant déterminé, des données nécessaires au poste de travail suivant, etc. On conçoit donc que dans un tel cas, il ne soit pas nécessaire, à l'arrivée d'un produit à un poste de travail, de lire la totalité des informations contenues dans son étiquette, mais seulement celles relatives à l'identification du produit et celles qu'y a inscrites le poste de travail .

La base de données 17 dispose d'outils logiciels de gestion pour ranger dans un ordre déterminé par l'utilisateur les informations qu'elle reçoît des différents postes de travail afin de constituer une base de données d'informations-objet complète et constamment remise à jour de toute l'installation qu'elle supervise. Ces outils logiciels permettent de développer sans programmation des applications à partir des informations fournies par les étiquettes. La base de données peut par exemple comporter plusieurs zones de mémorisation correspondant chacune à un poste de travail et/ou à un produit en cours de traitement. Chacune de ces zones peut comporter plusieurs subdivisions correspondant chacune à un paramètre ou à un travail différent : résultats de mesures, différentes opérations effectuées à un même poste de travail, état des différents outils d'un poste de travail,etc. Bien entendu, pour les différentes zones de mémorisation, les subdivisions concernant un même paramètre ont avantageusement des repères communs ou des adresses permettant de les retrouver facilement en vue de procéder très rapidement à des opérations communes concernant la totalité des produits en cours de traitement, par exemple pour effectuer instantanément des statistiques ou des vérifications sur un paramètre donné (tel que l'évolution de la qualité d'un usinage entre le premier produit usiné et le dernier, évolution due à l'augmentation d'usure d'un outil).

Selon le diagramme de la figure 7, la base de données 17 constitue le noyau 37 d'une architecture d'exploitation en temps réel des informations-objet. Le noyau 37 comprend dans sa proche périphérie une couche 38 permettant son intégration sous différents systèmes d'exploitation de machines mini- ou micro-ordinateurs, une couche 39 de gestion du réseau à haut débit 16 et de contrôle des commandes envoyées aux dispositifs fixes 12, une couche 40 de traitement des informations-objet reçues des dispositifs fixes 12 et rangées dans la base de données 17, une couche 41 de diffusion à tous les dispositifs 12 d'une demande de fin d'actualisation lancée par un dispositif fixe 12 défaillant, une couche 42 de gestion de contexte dont la tâche consiste à consulter la base de données 17 et à envoyer la commande de mise à jour au dispositif fixe 12 demandeur, une couche 43 qui contrôle l'intégrité, objet par objet, de l'information-objet répartie sur le site, et alerte l'application qui lui est rattachée en cas de défaut, et une couche 44 qui assure la relation entre la base de données 17 et un centre de supervision distant (non représenté).

Autour du noyau 37 et des couches 38 à 44 d'interface ou de contrôle, la base de données 17 dispose de tâches qui constituent des applications développables sans programmation, à l'aide d'outils logiciels intégrés à cette base de données. Ces applications concernent principalement la mise en forme ou toute opération à partir des informations-objet, et peuvent être les suivantes, à titre d'exemples non exhaustifs : des tâches 45 d'établissement de statistiques, des tâches 46 de surveillance de paramètres liés au fonctionnement des machines et traduits en informations, des tâches 47 d'édition de rapports, des tâches 48 de programmation de dispositifs fixes, des tâches 49 d'alerte, des tâches 49A d'interfaçage avec le centre de supervision distant,... La base de données 17 peut être mise en oeuvre sous forme d'un progiciel résidant sur un support mémoire installable sur un mini- ou un micro-ordinateur doté des interfaces matérielles qui peuvent coopérer avec les couches précitées du noyau 37.

La base de données 17 informe les dispositifs fixes 12 par la couche 39 de gestion du réseau 16 sur les informations nécessaires pour l'actualiser. En coopération avec le centre de supervision, la base de données met en forme, par la couche 40 d'affectation des informations reçues et la tâche 49 d'interfaçage, la présentation des informations, initialise des alertes ( problèmes d'approvisionnement, de qualité, de changement d'outil, de réaffectation de moyens,...) en fonction de paramètres issus du centre de supervision. En coopération avec les services d'exploitation, la base de données établit, par les applications 45 ou 46 et à partir des informations-objet, des graphes, des statistiques, adresse des alertes de maintenance préventive,... En coopération avec le centre de supervision, elle contrôle par la couche 43 l'intégrité de l'information-objet en cas d'altération intempestive ou malveillante, et en coopération avec l'ensemble des dispositifs fixes (12), elle permet, par la couche 38 de distribution de contexte, de mettre en place une stratégie d'anticipation d'optimisation prochaine de processus.

Les dispositifs fixes 12 doivent être organisés de sorte que la fonction de collecte d'informations à destination de la base de données 17 ne ralentisse pas ou n'affecte pas le processus. Un moyen avantageux consiste à doter les dispositifs fixes de circuits de capture (18) interchangeables en fonction des types et technologies de dispositifs informatifs utilisés, sous réserve de respecter les conditions d'interfaçage avec le processeur 19 (interface 20).

La figure 8 montre un exemple de protocole possible utilisé par le réseau à haut débit 16 pour actualiser la base de données 17. Une trame T de ce protocole comporte: un en-tête E-T utilisé pour la synchronisation, un bloc de données 50, représenté agrandi en bas de la figure 8, et un champ FIN de contrôle de fin de trame. Le bloc 50 comporte: un champ IDF d'identification de dispositif fixe (12), un champ IDO d'identification d'objet (produit soumis au processus, ou identité d'utilisateur, ou même identité de l'étiquette), un champ N indiquant le nombre N de paquets (P.1 à P.N) qui vont suivre, et les N paquets. Chaque paquet comprend: un champ ADR d'adresses des informations dans la mémoire de l'étiquette, un champ n donnant le nombre n d'informations INF-O du paquet en question, un champ INF-O d'informations liées à l'objet, et un champ CRC de contrôle (tel que "checksum") de l'intégrité du paquet.

Un tel type de protocole reçu par tous les dispositifs fixes 12 de l'installation leur permet de mettre à jour le contenu de leur mémoire de contexte. Le nombre et la partition des paquets sont définis par la base de données 17 qui peut les changer à tout moment et dans une partie ou tous les dispositifs fixes par le simple envoi d'une commande à la mémoire 19A du dispositif fixe correspondant.

Dans les circuits de capture 18, le processeur 21 peut en outre commander l'adaptation des caractéristiques des interfaces 25, 26 aux caractéristiques des étiquettes lorsque l'on échange ou modifie celles-ci, par exemple passage en cours de processus ou hors processus, d'étiquettes à lecture sélective aux étiquettes à lecture globale, ou bien nouvelles étiquettes à mémoire organisée différemment. Cette adaptation peut également consister à modifier par programme les caractéristiques des adaptateurs 24A, 25A, s'ils existent.

Ainsi, l'invention, par la gestion de la base de données, permet au centre de supervision de connaître à tout moment l'état informatif de la totalité ou de la quasi-totalité (si certains renseignements sont considérés comme de peu d'importance et ne sont donc pas inscrits dans les étiquettes électroniques) de l'installation industrielle équipée du dispositif de l'invention (état d'avancement du traitement de l'ensemble des produits circulant dans l'installation, localisation géographique de n'importe quel produit, état de toutes les machines,...), tout en bénéficiant de la souplesse de l'organisation à données réparties (gestion locale de la plupart des opérations, facilité d'adaptation et de reconversion, modularité,...). En outre, chaque machine peut communiquer rapidement avec toutes les autres via le dispositif fixe 12 qui lui est rattaché et qui surveille en permanence le réseau 16, ou via la base de données 17 puisque celle-ci est rafraîchie sans arrêt.

## Revendications

1. Procédé de gestion et de supervision de processus à partir des informations véhiculées par des objets soumis au processus et mis en oeuvre dans une installation comportant un centre de supervision, plusieurs dispositifs fixes (12) d'échange de données et des dispositifs informatifs (9a, 9b,..) portés par lesdits objets (2a, 2b,..) et contenant lesdites informations , ces dispositifs informatifs comportant des moyens d'échange de données susceptibles de coopérer avec les dispositifs fixes, caractérisé par le fait qu'il consiste à centraliser les informations, portées par les objets et réparties dans l'installation, dans une base de données (17) reliée aux dispositifs fixes qui capturent prioritairement dans leur mémoire associée (23) au moins la partie essentielle de ces informations et qui téléchargent au moins une partie du contenu de la mémoire associée dans la base de données pour l'actualiser en temps réel.

2. Procédé selon la revendication 1, caractérisé par le fait que la base de données coordonne l'ensemble de capture et met en oeuvre une stratégie d'acquisition de toutes les informations réparties qui lui sont nécessaires.

3. Procédé selon la revendication 1 ou 2, caractérisé par le fait que le téléchargement des informations mémorisées dans les dispositifs fixes vers la base de données est fait à l'initiative des dispositifs fixes.

4. Procédé selon la revendication 1 ou 2, caractérisé par le fait que le téléchargement des informations mémorisées dans les dispositifs fixes vers la base de données est fait à l'initiative de cette base de données.

5. Procédé selon l'une des revendications précédentes, caractérisé par le fait que chaque dispositif fixe surveille les informations transitant entre les différents dispositifs fixes et la base de données et mémorise en permanence au moins certaines informations émises par tous les autres dispositifs fixes vers la base de données.

6. Procédé selon l'une des revendications précédentes caractérisé par le fait que les informations mémorisées dans chaque dispositif fixe y sont rangées par type d'information.

7. Procédé selon la revendication 6, caractérisé par le fait que la base de données choisit le type des informations à relever.

8. Procédé selon l'une des revendications précédentes caractérisé par le fait que le téléchargement ne concerne que les informations ayant changé depuis la lecture précédente.

9. Procédé selon la revendication 7, caractérisé par le fait que l'information relative au type d' "objet" est prélevée à chaque téléchargement.

10. Procédé selon l'une des revendications précédentes caractérisé par le fait que lorsque le dispositif fixe lit dans les dispositifs informatifs plusieurs zones d'information et qu'au moins une partie de ces zones ont des éléments communs, il ne relève qu'une seule fois ces éléments communs.

11. Procédé selon l'une des revendications précédentes caractérisé par le fait que dans chaque dispositif fixe un programme exploite localement les données fournies par chaque dispositif informatif qui se présente devant lui.

12. Procédé selon l'une des revendications précédentes, caractérisé par le fait que le dispositif fixe donne la priorité à la lecture des informations des dispositifs informatifs.

13. Procédé selon la revendication 12, caractérisé par le fait que la priorité peut être accordée à la suite d'une demande de la base de données pour la mettre à jour.

14. Procédé selon l'une des revendications précédentes, caractérisé par le fait que chaque dispositif fixe met en oeuvre un programme de distribution de priorités en cas de simultanéité de demandes d'accès de plusieurs dispositifs fixes vers la base de données.

15. Procédé selon la revendication 12 ou 13, caractérisé par le fait qu'en cas d'impossibilité d'achever sa fonction dans un dispositif fixe, celui-ci peut en demander l'exécution ou la fin d'exécution aux autres dispositifs fixes via la base de données.

16. Procédé selon l'une des revendications précédentes caractérisé par le fait que le dispositif fixe fonctionne en système multitâches à noyau en temps réel et tâches subordonnées, l'une de ses tâches étant la détection des dispositifs informatifs se présentant devant lui et la capture d'au moins une partie de leurs informations (28.1,..).

17. Procédé selon la revendication 16, caractérisé par le fait que le système multitâches comporte au moins l'une des tâches suivantes: commande (29) d'au moins une machine locale (15), surveillance (30) des informations émises par les autres dispositifs fixes et de demandes de consultation de la base de données émises par les dispositifs fixes.

18. Procédé selon l'une des revendications précédentes, caractérisé par le fait que les dispositifs fixes appliquent un algorithme d'optimisation définissant, à partir de leurs besoins en informations relatives aux objets du processus, l'accès optimum aux dispositifs informatifs.

19. Procédé selon la revendication 18, caractérisé par le fait que l'algorithme met en oeuvre l'intégralité des ressources émetteurs-récepteurs (13, 14) reliés aux dispositifs fixes.

20. Procédé selon la revendication 18 ou 19, caractérisé par le fait que le dispositif fixe met en oeuvre un algorithme d'optimisation d'accès aux dispositifs informatifs qui tient compte de la fourniture d'informations par l'organe de traitement local.

21. Procédé selon l'une des revendications précédentes, caractérisé par le fait que les dispositifs fixes comportent des adaptateurs de protocole pilotant eux-mêmes le protocole de communication entre les dispositifs fixes et les dispositifs informatifs.

22. Procédé selon l'une des revendications précédentes, caractérisé par le fait qu'une partie des informations relatives à l'évolution de l'objet dans le processus est fournie par un organe de traitement local (15) relié au dispositif fixe.

23. Procédé selon l'une des revendications précédentes, caractérisé par le fait que la base de données constitue le noyau (37) d'une architecture de traitement en temps réel, associé à au moins l'une des tâches suivantes: couche (38) d'intégration sous différents systèmes d'exploitation, couche (39) de gestion d'un réseau à haut débit (16) et de contrôle des commandes envoyées aux dispositifs fixes, couche (40) de traitement des informations reçues des dispositifs fixes, couche (41) de diffusion à tous les dispositifs fixes d'une demande de fin d'actualisation lancée par un dispositif fixe défaillant, couche (42) de gestion de contexte pour la consultation de la base de données et envoi d'une commande de mise à jour à un dispositif fixe demandeur, couche (43) de contrôle d'intégrité, objet par objet, de l'information répartie sur le site, et couche (44) de relation entre la base de données et un centre de supervision distant.

24. Procédé selon la revendication 23, caractérisé par le fait que le noyau de la base de données intègre des outils logiciels constituant le gestionnaire de la base de données et permettant de développer sans programmation des applications à partir des informations des dispositifs informatifs.

25. Procédé selon la revendication 24,caractérisé par le fait que les applications comprennent l'une au moins des tâches suivantes: établissement de statistiques (45), surveillance de paramètres liés au fonctionnement de machines (46), édition de rapports (47), programmation de dispositifs fixes (48), alerte (49), interfaçage avec un centre de supervision distant (49A).

26. Procédé selon l'une des revendications précédentes, caractérisé par le fait que les données fournies par les dispositifs fixes à la base de données comportent: l'identification du dispositif fixe (IDF), l'identification de l'objet avec lequel ils ont communiqué (IDO), le nombre de paquets d'informations founies par l'objet.

27. Procédé selon la revendication 26, caractérisé par le fait que chaque paquet comporte: les adresses des informations dans le dispositif informatif (ADR), le nombre d'informations du paquet (n), les informations liées à l'objet (INF-O), un champ de contrôle (CRC).

28. Procédé selon la revendication 26 ou 27, caractérisé par le fait que les données forment les trames d'un protocole de communications entre dispositifs fixes et base de données.

29. Procédé selon l'une quelconque des revendications précédentes, caractérisé par le fait que la base de données communique avec les dispositifs fixes via une liaison à haut débit (16).

30. Dispositif de gestion de processus dans une installation comportant un centre de supervision, plusieurs dispositifs fixes (12) d'échange de données sans contact et de traitement local, et des dispositifs informatifs (9a, 9b) pouvant être fixés sur des objets mobiles (2a, 2b) soumis au processus, ces dispositifs informatifs comportant des moyens d'échange de données susceptibles de coopérer avec les dispositifs fixes (13,14) ainsi qu'une mémoire non volatile, caractérisé par le fait que le centre de supervision est relié à des moyens de mémorisation organisés en base de données (17), que les différents dispositifs fixes comportent chacun une mémoire (23) susceptible de stocker des informations provenant des dispositifs informatifs, et une mémoire de programme (19A) contenant un programme de gestion locale et un programme d'optimisation d'accès à la base de données et aux dispositifs informatifs, les différents dispositifs fixes étant reliés à la base de données par une liaison à haut débit (16) et la base de données étant actualisée en temps réel.

31. Dispositif selon la revendication 30, caractérisé par le fait que les différents dispositifs fixes d'échange de données comportent chacun au moins un circuit de capture (18.1) comprenant: un processeur (21),une mémoire vive (23) susceptible de stocker des informations provenant des étiquettes électroniques, et une mémoire de programme (22) de gestion des communications avec les dispositifs informatifs, et une interface (20) de communication avec le processeur (19) du dispositif fixe.

32. Dispositif selon la revendication 31, caractérisé par le fait que chaque circuit de capture comporte au moins un circuit d'interface (24, 25) relié à un dispositif émetteur-récepteur (13, 14), ce circuit d'interface étant programmable en fonction du type de dispositif informatif utilisé.

33. Dispositif selon la revendication 31 ou 32, caractérisé par le fait que chaque circuit de capture comporte un adaptateur de protocole (24A, 25A) relié à son processeur (21), comportant un espace mémoire temporaire et programmable.

34. Dispositif selon l'une des revendications 30 à 33, caractérisé par le fait que les dispositifs fixes comportent un système multitâches dont l'une des tâches (30) concerne la gestion et la mémorisation des informations lues dans les dispositifs informatifs.

35. Installation industrielle caractérisée par le fait qu'elle comporte un dispositif selon l'une des revendications 30 à 34.

36. Installation industrielle caractérisée par le fait qu'elle met en oeuvre le procédé de gestion selon l'une des revendications 1 à 29.

## Patentansprüche

1. Verfahren zur Lenkung und Überwachung von Prozessen mittels Daten, die von dem Prozess unterworfenen Objekten befördert werden, durchgeführt in einer Anlage, die eine Überwachungszentrale, mehrere feststehende Datenaustauschvorrichtungen (12) und von diesen Objekten (2a, 2b,...) getragene und diese Daten enthaltende informatorische Vorrichtungen (9a, 9b,...) umfaßt, die Datenaustauschmittel umfassen, die mit den feststehenden Vorrichtungen zusammenwirken können, dadurch gekennzeichnet, daß es darin besteht, daß die von den Objekten getragenen und in der Anlage verteilten Daten in einer Datenbasis (17) zentralisiert werden, die mit den feststehenden Vorrichtungen verbunden ist, die vorrangig in ihrem zugeordneten Speicher (23) mindestens den wesentlichen Teil dieser Daten einfangen und die mindestens einen Teil des Inhalts des zugeordneten Speichers in die Datenbasis zu ihrer Aktualisierung in Echtzeit fernladen.

2. Verfahren nach Anspruch 1, dadurch gekennzeichnet, daß die Datenbasis die Einfangeinheit koordiniert und eine Strategie der Erfassung aller verteilter Daten, die für sie erforderlich sind, einsetzt.

3. Verfahren nach Anspruch 1 oder 2, dadurch gekennzeichnet, daß die Fernladung der in den feststehenden Vorrichtungen gespeicherten Daten in die Datenbasis auf Initiative der feststehenden Vorrichtungen geschieht.

4. Verfahren nach Anspruch 1 oder 2, dadurch gekennzeichnet, daß die Fernladung der in den feststehenden Vorrichtungen gespeicherten Daten in die Datenbasis auf Initiative dieser Datenbasis geschieht.

5. Verfahren nach einem der vorhergehenden Ansprüche, dadurch gekennzeichnet, daß jede feststehende Vorrichtung die zwischen den einzelnen feststehenden Vorrichtungen und der Datenbasis übertragenen Daten überwacht und mindestens manche von allen anderen feststehenden Vorrichtungen zur Datenbasis gesendete Daten permanent speichert.

6. Verfahren nach einem der vorhergehenden Ansprüche, dadurch gekennzeichnet, daß die in jeder feststehenden Vorrichtung gespeicherten Daten in dieser nach dem Datentyp geordnet sind.

7. Vorrichtung nach Anspruch 6, dadurch gekennzeichnet, daß die Datenbasis den Typ der zu aufzunehmenden Daten wählt.

8. Verfahren nach einem der vorhergehenden Ansprüche, dadurch gekennzeichnet, daß die Fernladung nur die Daten betrifft, die sich seit der vorhergehenden Ablesung geändert haben.

9. Verfahren nach Anspruch 7, dadurch gekennzeichnet, daß die den "Objekt"-Typ betreffende Information bei jeder Fernladung entnommen wird.

10. Verfahren nach einem der vorhergehenden Ansprüche, dadurch gekennzeichnet, daß die feststehende Vorrichtung, wenn sie in den informatorischen Vorrichtungen mehrere Datenzonen liest und mindestens ein Teil dieser Zonen gemeinsame Elemente hat, diese gemeinsamen Elemente nur ein einziges Mal aufnimmt.

11. Verfahren nach einem der vorhergehenden Ansprüche, dadurch gekennzeichnet, daß in jeder feststehenden Vorrichtung ein Programm örtlich die Daten verwertet, die von jeder informatorischen Vorrichtung geliefert werden, die sich vor ihr befindet.

12. Verfahren nach einem der vorhergehenden Ansprüche, dadurch gekennzeichnet, daß die feststehende Vorrichtung der Ablesung der Daten der informatorischen Vorrichtungen den Vorrang gibt.

13. Verfahren nach Anspruch 12, dadurch gekennzeichnet, daß die Priorität abgestimmt auf die Reihenfolge einer Anforderung der Datenbasis sein kann, sie zu aktualisieren.

14. Verfahren nach einem der vorhergehenden Ansprüche, dadurch gekennzeichnet, daß jede feststehende Vorrichtung im Fall der Gleichzeitigkeit von Zugriffsanforderungen von mehreren feststehenden Vorrichtungen zur Datenbasis ein Programm zur Verteilung von Prioritäten anwendet.

15. Verfahren nach Anspruch 12 oder 13, dadurch gekennzeichnet, daß eine feststehende Vorrichtung im Fall der Unmöglichkeit, ihre Funktion in ihr zu erfüllen, deren Durchführung oder die Beendigung ihrer Durchführung von den anderen feststehenden Vorrichtungen über die Datenbasis verlangen kann.

16. Verfahren nach einem der vorhergehenden Ansprüche, dadurch gekennzeichnet, daß die feststehende Vorrichtung im mehrere Aufgaben bewältigenden System mit Echtzeitkern und übergeordneten Aufgaben arbeitet, wobei eine ihrer Aufgaben die Erfassung der vor sie gelangenden informatorischen Vorrichtungen und die Aufnahme von mindestens einem Teil deren Daten ist (28.1...).

17. Verfahren nach Anspruch 16, dadurch gekennzeichnet, daß das Mehrprozessbetriebssystem mindestens eine der folgenden Aufgaben umfaßt: Steuerung (29) mindestens einer örtlichen Maschine (15), Überwachung (30) der von den anderen feststehenden Vorrichtungen gesendeten Daten und von von den feststehenden Vorrichtungen gesendeten Anforderungenzur Konsultierung der Datenbasis.

18. Verfahren nach einem der vorhergehenden Ansprüche, dadurch gekennzeichnet, daß die feststehenden Vorrichtungen einen Optimierungsalgorithmus anwenden, der, ausgehend von ihrem Bedarf an die Objekte des Prozesses betreffenden Daten, den optimalen Zugriff auf die informatorischen Vorrichtungen definiert.

19. Verfahren nach Anspruch 18, dadurch gekennzeichnet, daß der Algorithmus die Gesamtheit der mit den feststehenden Vorrichtungen verbundenen Sende-Empfangs-Hilfsmittel (13, 14) einsetzt.

20. Verfahren nach Anspruch 18 oder 19, dadurch gekennzeichnet, daß die feststehende Vorrichtung einen Algorithmus zur Optimierung des Zugriffs auf die informatorischen Vorrichtungen anwendet, der der Lieferung von Daten durch das örtliche Verarbeitungsorgan Rechnung trägt.

21. Verfahren nach einem der vorhergehenden Ansprüche, dadurch gekennzeichnet, daß die feststehenden Vorrichtungen Protokolladapter besitzen, die ihrerseits das Protokoll der Kommunikation zwischen den feststehenden Vorrichtungen und den informatorischen Vorrichtungen steuern.

22. Verfahren nach einem der vorhergehenden Ansprüche, dadurch gekennzeichnet, daß ein Teil der die Bewegung des Objekts im Prozess betreffenden Daten von einem mit der feststehenden Vorrichtung verbundenen örtlichen Verarbeitungsorgan (15) geliefert wird.

23. Verfahren nach einem der vorhergehenden Ansprüche, dadurch gekennzeichnet, daß die Datenbasis den Kern (37) einer Echtzeit-Verarbeitungsarchitektur bildet, der mindestens einer der folgenden Aufgaben zugeordnet ist; Schicht (38) zur Integrierung verschiedener Systeme der Betriebsführung, Schicht (39) zur Verwaltung eines Netzes (16) mit hohem Durchsatz und zur Steuerung der den feststehenden Vorrichtungen zugeführten Befehlen, Schicht (40) zur Verarbeitung der von den feststehenden Vorrichtungen empfangenen Daten, Schicht (41) zur Verteilung einer von einer ausgefallenen feststehenden Vorrichtung gesendeten Anforderung der Beendigung der Aktualisierung an alle feststehenden Vorrichtungen, Schicht (42) zur Kontextverwaltung für die Konsultierung der Datenbasis und Sendung eines Aktualisierungsbefehls an eine anfordernde feststehende Vorrichtung, Schicht (43) zur Überwachung der Unversehrtheit, Objekt für Objekt, der auf den Standort verteilten Information und Schicht (44) der Beziehung zwischen der Datenbasis und einer entfernten Überwachungszentrale.

24. Verfahren nach Anspruch 23, dadurch gekennzeichnet, daß in den Kern der Datenbasis Softwarewerkzeuge integriert sind, die den Verwalter der Datenbasis bilden und gestatten, ausgehend von den Daten der informatorischen Vorrichtungen ohne Programmierungen Anwendungen zu entwickeln.

25. Verfahren nach Anspruch 24, dadurch gekennzeichnet, daß die Anwendungen mindestens eine der folgenden Aufgaben umfassen: Erstellung von Statistiken (45), Überwachung von mit dem Betrieb von Maschinen verbundenen Parametern (46), Edition von Berichten (47), Programmierung von feststehenden Vorrichtungen (48), Alarm (49), Schnittstellenbildung mit einer entfernten Überwachungszentrale (49A).

26. Verfahren nach einem der vorhergehenden Ansprüche, dadurch gekennzeichnet, daß die von den feststehenden Vorrichtungen der Datenbasis gelieferten Daten umfassen: die Identifizierung der feststehenden Vorrichtung (IDF), die Identifizierung des Objekts, mit dem sie kommuniziert haben (IDO), die Anzahl von dem Objekt gelieferten Datenpaketen.

27. Verfahren nach Anspruch 26, dadurch gekennzeichnet, daß jedes Paket umfaßt: die Adressen der Daten in der informatorischen Vorrichtung (ADR), die Anzahl von Daten des Pakets (n), die mit dem Objekt verbundenen Daten (INF-O), ein Steuerfeld (CRC).

28. Verfahren nach Anspruch 26 oder 27, dadurch gekennzeichnet, daß die Daten die Raster eines Protokolls der Kommunikationen zwischen feststehenden Vorrichtungen und Datenbasis bilden.

29. Verfahren nach einem der vorhergehenden Ansprüche, dadurch gekennzeichnet, daß die Datenbasis mit den feststehenden Vorrichtungen über eine Verbindung (16) mit hohem Durchsatz kommuniziert.

30. Vorrichtung zur Lenkung von Prozessen in einer Anlage, die eine Überwachungszentrale, mehrere feststehende vorrichtungen (12) zum Datenaustausch ohne Kontakt und zur örtlichen Verarbeitung und informatorische Vorrichtungen (9a, 9b) umfaßt, die auf dem Prozeß unterworfenen, beweglichen Objekten (2a, 2b) befestigt sein können und Datenaustauschmittel, die mit den feststehenden Vorrichtungen (13, 14) zusammenwirken können, sowie einen nichtflüchtigen Speicher umfassen, dadurch gekennzeichnet, daß die Überwachungszentrale mit Speichermitteln verbunden ist, die als Datenbasis (17) organisiert sind, daß die verschiedenen feststehenden Vorrichtungen jeweils einen Speicher (23), der von den informatorischen Vorrichtungen kommende Daten speichern kann, und einen Programmspeicher (19A) umfassen, der ein Programm zur örtlichen Lenkung und ein Programm zur Optimierung des Zugriffs auf die Datenbasis und auf die informatorischen Vorrichtungen enthält, wobei die einzelnen feststehenden Vorrichtungen mit der Datenbasis durch eine Verbindung (16) mit hohem Durchsatz verbunden sind und die Datenbasis in Echtzeit aktualisiert wird.

31. Vorrichtung nach Anspruch 30, dadurch gekennzeichnet, daß die einzelnen feststehenden Datenaustauschvrorrichtungen jeweils mindestens eine Einfangschaltung (18.1) umfassen, die umfaßt: einen Prozessor (21), einen Lebendspeicher (23), der von den elektronischen Etiketten kommende Daten speichern kann, und einen Speicher (22) für das Programm zur Verwaltung der Kommunikationen mit den informatorischen Vorrichtungen und eine Schnittstelle (20) zum Kommunizieren mit dem Prozessor (19) der feststehenden Vorrichtung.

32. Vorrichtung nach Anspruch 31, dadurch gekennzeichnet, daß jede Einfangschaltung mindestens eine Schnittstellenschaltung (24, 25) umfaßt, die mit einer Sende-Empfangs-Vorrichtung (13, 14) verbunden ist und in Abhängigkeit von dem Typ der benutzten informatorischen Vorrichtung programmierbar ist.

33. Vorrichtung nach Anspruch 31 oder 32, dadurch gekennzeichnet, daß jede Einfangschaltung einen mit ihrem Prozessor (21) verbundenen Protokolladapter (24A,25A) besitzt, der einen programmierbaren Zwischenspeicherraum besitzt.

34. Vorrichtung nach einem der Ansprüche 30 bis 33, dadurch gekennzeichnet, daß die feststehenden Vorrichtungen ein mehrere Aufgaben bewältigendes System umfassen, von dem eine der Aufgaben (30) die Verwaltung und Speicherung der in den informatorischen Vorrichtungen gelesenen Daten betrifft.

35. Industrieanlage, dadurch gekennzeichnet, daß sie eine Vorrichtung nach einem der Ansprüche 30 bis 34 umfaßt.

36. Industrieanlage, dadurch gekennzeichnet, daß sie das Lenkungsverfahren nach einem der Ansprüche 1 bis 29 anwendet.

## Claims

1. Method of process control and supervision on the basis of information transported by the objects subjected to the process and implemented in an installation including a supervision centre, several fixed data exchange devices (12) and computer-based devices (9a, 9b, etc.) carried by the said objects (2a, 2b, etc.) and containing the said information, these computer-based devices including data exchange means able to interact with the fixed devices, characterized in that it consists in centralizing the information carried by the objects and distributed in the installation, in a data base (17) linked to the fixed devices which, in priority, in their associated memory (23), capture at least the essential part of this information and which remotely load at least a part of the contents of the associated memory into the data base in order to update it in real time.

2. Method according to Claim 1, characterized in that the data base coordinates the capture assembly and implements a strategy for acquisition of all the distributed information which is necessary to it.

3. Method according to Claim 1 or 2, characterized in that the remote loading of the information held in the fixed devices into the data base is done at the initiative of the fixed devices.

4. Method according to Claim 1 or 2, characterized in that the remote loading of the information held in the fixed devices into the data base is done at the initiative of this data base.

5. Method according to one of the preceding claims, characterized in that each fixed device monitors the information transiting between the various fixed devices and the data base, and continuously holds at least some information sent by all the other fixed devices to the data base.

6. Method according to one of the preceding claims, characterized in that the information held in each fixed device is stored therein by information type.

7. Method according to Claim 6, characterized in that the data base chooses the type of information to be picked up.

8. Method according to one of the preceding claims characterized in that the remote loading concerns only the information having changed since the preceding reading.

9. Method according to Claim 7, characterized in that the information relating to the type of "object" is picked up at each remote loading.

10. Method according to one of the preceding claims, characterized in that when the fixed device reads several information areas in the computer-based devices, and when at least a part of these areas have common elements, it picks up these common elements only one single time.

11. Method according to one of the preceding claims, characterized in that, in each fixed device, a program locally makes use of the data supplied by each computer-based device which is presented to it.

12. Method according to one of the preceding claims, characterized in that the fixed device gives priority to reading the information from the computer-based devices.

13. Method according to Claim 12, characterized in that the priority can be accorded following a request from the data base for an update of it.

14. Method according to one of the preceding claims, characterized in that each fixed device implements a priority distribution program in the event of simultaneity of requests for access from several fixed devices to the data base.

15. Method according to Claim 12 or 13, characterized in that, in the event of it being impossible to fulfil its function in a fixed device, the latter can ask the other fixed devices for the execution or the end of execution thereof, via the data base.

16. Method according to one of the preceding claims, characterized in that the fixed device operates as a multi-tasking system with a real-time kernel and subordinate tasks, one of its tasks being the detection of the computer-based devices being presented to it, and the capture of at least a part of their information (28.1, etc).

17. Method according to Claim 16, characterized in that the multi-tasking system includes at least one of the following tasks: control (29) of at least one local machine (15), monitoring (30) of the information sent by the other fixed devices and the requests for consultation of the data base sent by the fixed devices.

18. Method according to one of the preceding claims, characterized in that the fixed devices apply an optimization algorithm defining the optimum access to the computer-based devices, on the basis of their requirements for information relating to the objects of the process.

19. Method according to Claim 18, characterized in that the algorithm employs the totality of the sender-receiver resources (13, 14), linked to the fixed devices.

20. Method according to Claim 18 or 19, characterized in that the fixed device employs an optimization algorithm for access to the computer-based devices, which takes account of the supply of information by the local processing unit.

21. Method according to one of the preceding claims, characterized in that the fixed devices include protocol adaptors themselves running the protocol for communication between the fixed devices and the computer-based devices.

22. Method according to one of the preceding claims, characterized in that a part of the information relating to the evolution of the object in the process is supplied by a local processing unit (15) linked to the fixed device.

23. Method according to one-of the preceding claims, characterized in that the data base constitutes the kernel (37) of a real-time processing architecture, associated with at least one of the following tasks: integration layer (38) under various operating systems, layer (39) for management of a high-speed network (16) and for checking the commands sent to the fixed devices, layer (40) for processing the information received from the fixed devices, layer (41) for broadcasting, to all the fixed devices, an end-of-update request initiated by a broken-down fixed device, context management layer (42) for consultation of the data base and sending of an update command to a requesting fixed device, layer (43) for integrity control, object by object, of the information distributed on the site, and layer (44) for the relation between the data base and a distant supervision centre.

24. Method according to Claim 23, characterized in that the kernel of the data base incorporates software tools constituting the data base management system and making it possible, without programming, to develop applications on the basis of the information from the computer-based devices.

25. Method according to Claim 24, characterized in that the applications comprise - at least one of the following tasks: production of statistics (45), monitoring of parameters relating to the operation of machines (46), issuing of reports (47), programming of fixed devices (48), warning (49), interfacing with a distant supervision centre (49A).

26. Method according to one of the preceding claims, characterized in that the data furnished by the fixed devices to the data base include: the identification of the fixed device (IDF), the identification of the object with which they have communicated (IDO), the number of information packets supplied by the object.

27. Method according to Claim 26, characterized in that each packet includes: the addresses of the information in the information device (ADR), the number of information items of the packet (n), the information related to the object (INF-O), a check field (CRC).

28. Method according to Claim 26 or 27, characterized in that the data form the frames of a protocol for communications between fixed devices and data base.

29. Method according to any one of the preceding claims, characterized in that the data base communicates with the fixed devices via a high-speed link (16).

30. Device for process control in an installation including a supervision centre, several fixed devices (12) for data exchange without contact and for local processing, and computer-based devices (9a, 9b) capable of being fixed to movable objects (2a, 2b), subjected to the process, these computer-based devices including data exchange means capable of interacting with the fixed devices (13, 14) as well as a non-volatile memory, characterized in that the supervision centre is linked to memory-storage means organized into a data base (17), in that the various fixed devices each include a memory (23) capable of storing information originating from the computer-based devices, and a program memory (19A) containing a local management program and a program for optimization of access to the data base and to the computer-based devices, the various fixed devices being linked to the data base via a high-speed link (16), and the data base being updated in real time.

31. Device according to Claim 30, characterized in that the various data-exchange fixed devices each include at least one capture circuit (18.1) comprising: a processor (21), a random-access memory (23) capable of storing information originating from the electronic labels, and a program memory (22) for management of the communications with the computer-based devices, and an interface (20) for communication with the processor (19) of the fixed device.

32. Device according to Claim 31, characterized in that each capture circuit includes at least one interface circuit (24, 25) linked to a sender-receiver device (13, 14), this interface circuit being programmable on the basis of the type of computer-based device used.

33. Device according to Claim 31 or 32, characterized in that each capture circuit includes a protocol adaptor (24A, 25A) linked to its processor (21), including a temporary and programmable memory space.

34. Device according to one of Claims 30 to 33, characterized in that the fixed devices include a multi-tasking system, one of the tasks (30) of which concerns the management and the memory-storage of the information read in the computer-based devices.

35. Industrial installation characterized in that it includes a device according to one of Claims 30 to 34.

36. Industrial installation characterized in that it implements the method of control according to one of Claims 1 to 29.
